Europäisches Patentamt

European Patent Office

Office européen des brevets

(19)

(11) Numéro de publication: **0 100 763**
**A1**

## (12) DEMANDE DE BREVET EUROPEEN

(21) Numéro de dépôt: **83870070.6**

(22) Date de dépôt: **08.07.83**

(51) Int. Cl.³: **B 28 D 1/06**

(30) Priorité: **03.08.82 FR 8213532**

(43) Date de publication de la demande:
**15.02.84 Bulletin 84/7**

(84) Etats contractants désignés:
**DE GB IT**

(71) Demandeur: **Egleme, Paul**
**Rue du Baillois, 42**
**B-1330 Rixensart(BE)**

(72) Inventeur: **Egleme, Paul**
**Rue du Baillois, 42**
**B-1330 Rixensart(BE)**

(54) **Equipage tendeur de lame de scie à pierre.**

(57) L'invention concerne le sciage de la pierre.

Elle a pour objet un équipage tendeur pour lame de scie à pierre, qui comprend, à chaque extrémité de la lame (16), une monture (17) qui est fixée sur le châssis participant au mouvement relatif de va-et-vient par rapport à la pierre à scier, et qui comporte un organe de fixation sur le châssis (18), une plaque rigide (20) articulée sur cet organe de fixation (18) par un organe (19) qui la laisse coulisser dans le plan de la lame et s'incliner selon un axe parallèle à la lame et situé à un niveau non supérieur à celui de la denture de la lame, des organes de montage de la lame (22, 23) portés par la plaque à son bord proche de la lame, des organes d'amarrage longitudinal (26) qui sont portés par la plaque rigide à son bord éloigné de la lame et qui n'entravent pas l'inclinaison par rapport au châssis, l'un de ces organes d'amarrage aboutissant au châssis et l'autre, qui lui est opposé, aboutissant à un organe de traction (27) porté par le châssis.

Cet équipage est préféré pour le montage des lames diamantées.

./...

EP 0 100 763 A1

Croydon Printing Company Ltd

Fig 6

La présente invention concerne le sciage de la pierre par mouvement de va-et-vient d'une lame portant des segments diamantés et plus particulièrement un équipage articulé pour ces lames.

Le sciage des blocs de pierre de grande hauteur se fait au moyen soit d'un câble hélicoïdal arrosé d'eau à laquelle est mélangé un abrasif particulaire, soit de lames tendues dans un cadre ou châssis animé d'un mouvement de va-et-vient et arrosées de la même manière, soit encore de lames droites ou bien courbes ou biconcaves (voir brevets belges n° 723.034 et 739.213) dont l'arête tranchante est garnie de segments diamantés et qui sont tendues dans un châssis animé d'un mouvement de va-et-vient.

L'avantage du câble hélicoïdal est qu'il donne généralement une surface assez plane. Ses inconvénients sont d'une part son coût élevé à cause du prix de l'abrasif utilisé (en général du carbure de silicium) et d'autre part le mauvais fini de la surface obtenue.

Les lames tendues et arrosées d'eau et d'abrasif donnent des résultats variables selon l'abrasif employé. Le sciage est extrêmement lent lorsqu'il s'agit de sable et est très coûteux lorsqu'on utilise le carbure de silicium, tout comme dans le cas du câble hélicoïdal. Si l'on utilise de la grenaille d'acier comme abrasif, l'opération est à la fois moins lente et moins onéreuse, mais donne un mauvais fini de surface, qui exige de longs travaux de polissage.

Seul le sciage au diamant allie la grande vitesse de pénétration au coût réduit et à l'excellent fini de surface. Toutefois, il exige des pressions de sciage d'autant plus élevées que le matériau est plus dur et cela provoque, pour les raisons évoquées plus loin et auxquelles l'invention remédie, des déviations et donc un trait de scie qui n'est pas parfaitement plan, surtout dans les matériaux durs.

La cause des inconvénients des lames diamantées fixées de la façon traditionnelle et la manière dont il y est remédié suivant l'invention sont exposées ci-après avec référence aux dessins annexés.

Dans les dessins :

Fig. 1 est une vue d'une lame diamantée droite;

Fig. 2 est une vue d'une lame diamantée cambrée;

Fig. 3 montre la déviation d'une lame droite;

Fig. 4 montre la déviation d'une lame cambrée;

Fig. 5 illustre la sollicitation de la lame droite ou cambrée dans des conditions supprimant la déviation;

Fig. 6 est une vue schématique et en perspective d'un équipage tendeur de lame conforme à l'invention;

Fig. 7 est une vue en perspective d'une partie d'un second équipage tendeur de lame conforme à l'invention;

Fig. 8 est une vue en perspective d'une partie d'un troisième équipage tendeur de lame conforme à l'invention;

Fig. 9 est un diagramme montrant la force de stabilisation de la lame;

Fig. 10 est une vue schématique d'ensemble d'un équipage avec lame sur un châssis oscillant à une lame;

Fig. 11 est une vue schématique d'ensemble d'un équipage avec lame sur un châssis à va-et-vient pour plusieurs lames, et

Fig. 12 est une vue du montage d'une lame droite dans un équipage tel que représenté à la Fig. 11.

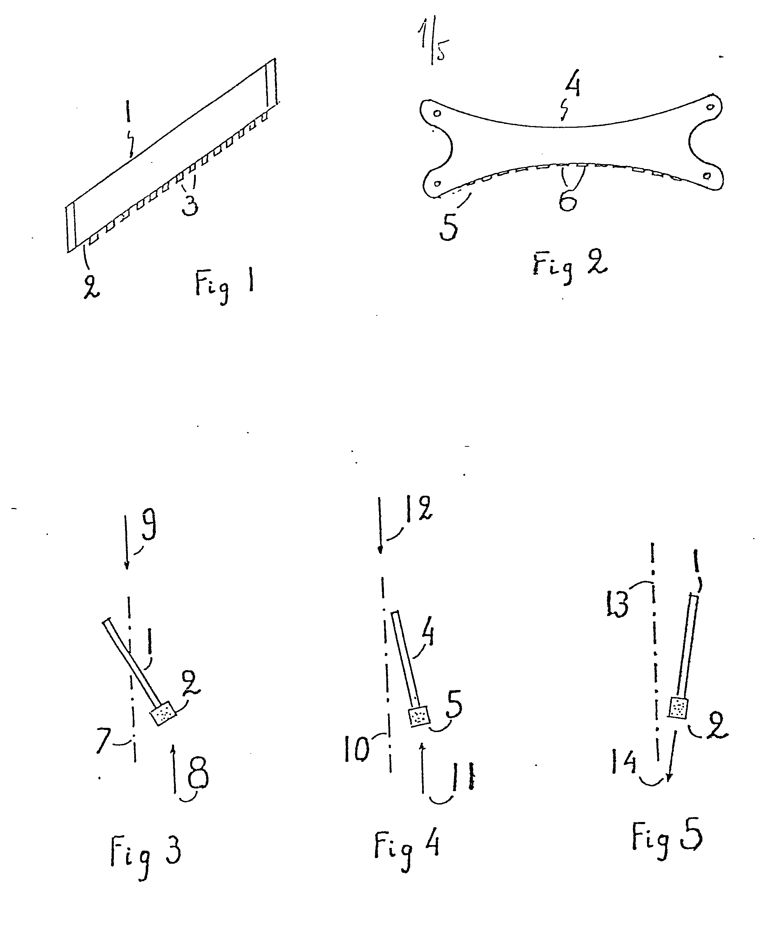

Les lames de scie diamantées sont donc pour les deux types importants les lames droites 1 (Fig. 1) qui sont tendues dans un cadre horizontal ou vertical animé d'un mouvement de va-et-vient parallèle à l'arête coupante 2, qui est garnie de segments diamantés 3 et les lames cambrées 4 (Fig. 2) conformes au brevet belge n° 739.213, qui sont tendues dans un cadre en forme de secteur animé d'un mouvement de va-et-vient circulaire de même centre que l'arête coupante 5 garnie de segments diamantés 6.

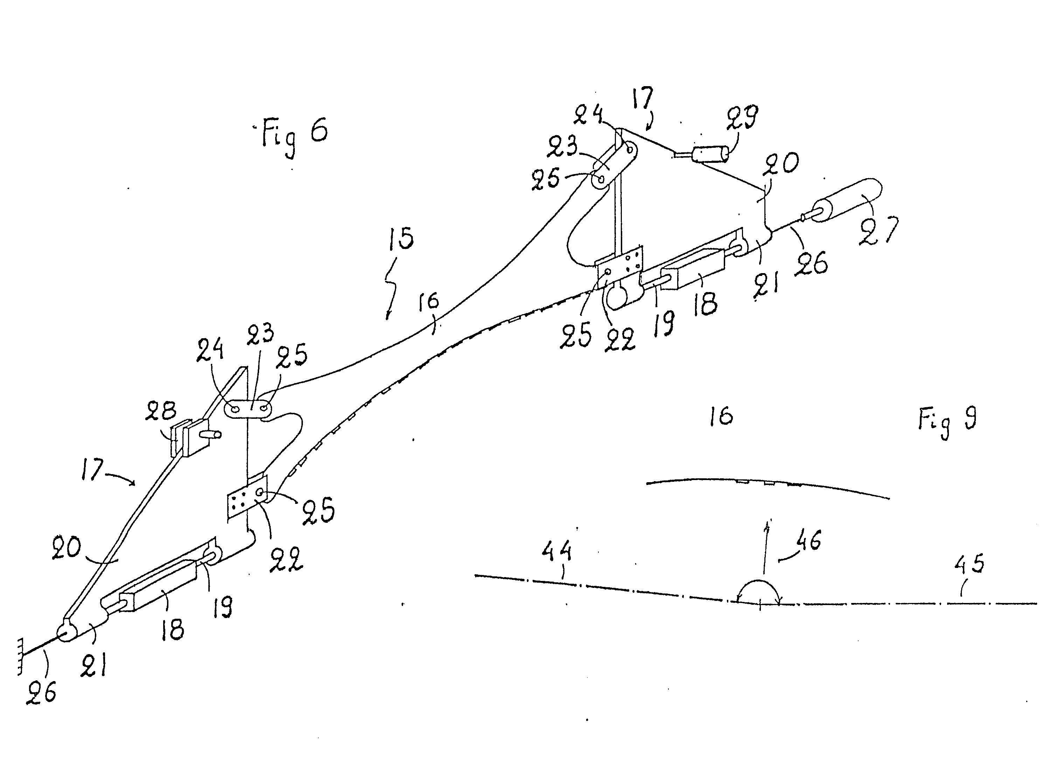

Une lame droite 1 (Fig. 1), même fortement tendue, ne donne pas un trait de scie qui reste parallèle au plan prévu. En effet, si l'arête coupante 2 se trouve déviée par rapport au plan de coupe idéal 7, par exemple par un minéral spécialement dur dans la pierre, la lame 1 se positionne comme le montre la Fig. 3 : la pression de sciage 8 et la réaction 9 constituent un couple tendant à augmenter la déviation.

Une lame cambrée 4 (Fig. 2), qui est tendue conformément au brevet précité, s'oriente comme indiqué à la Fig. 4. La situation est moins défavorable qu'à la Fig. 3, mais la déviation par rapport au plan de coupe idéal 10 n'est pas encore annulée malgré la diminution du couple constitué par la pression de sciage 11 et la réaction 12 et le fait que la lame s'incline moins.

La Fig. 5 montre que la suppression du couple de déviation 8, 9 (ou 11, 12) permettrait de résoudre la difficulté, puisque la force 14 intervenant pour appliquer la lame 1 (ou 4) sur la pierre est une force de traction, qui ramène la lame vers le plan de sciage prévu.

A cet effet, l'invention a pour objet un équipage qui permet de tendre une lame de scie à pierre et qui comprend, à un niveau non supérieur à celui de la denture de la lame, une articulation située au-delà de chaque extrémité de la lame pour supprimer le couple de déviation.

L'équipage tendeur pour lame de scie à pierre de l'invention comprend, à chaque extrémité de la lame, une monture qui est fixée sur le châssis participant au mouvement relatif de va-et-vient par rapport à la pierre à scier, et qui comporte un organe de fixation sur le châssis, une plaque rigide articulée sur cet organe de fixation par un organe qui la laisse coulisser dans le plan de la lame et s'incliner selon un axe parallèle à la lame et situé à un niveau non supérieur à celui de la denture de la lame, des organes de montage de la lame portés par la plaque à son bord proche de la lame, des organes d'amarrage longitudinal qui sont portés par la plaque rigide à son bord éloigné de la lame et qui n'entravent pas l'inclinaison par rapport au châssis, l'un de ces organes d'amarrage aboutissant au châssis et l'autre, qui lui est opposé, aboutissant à un organe de traction porté par le châssis.

Dans une forme de réalisation de l'invention, l'organe de fixation sur le châssis comprend une forure qui est orientée suivant la lame et qui reçoit une tringle coulissant librement et constituant l'organe qui laisse coulisser et s'incliner la plaque.

Dans une autre forme de réalisation de l'invention, l'organe de fixation sur le châssis comprend deux blocs alignés suivant la lame et comportant chacun une rainure longitudinale en V dont l'une est ouverte à l'encontre de l'autre et dans chacune desquelles se pose un bord doublement chanfreiné de la plaque, ces deux blocs constituant avec les bords de la plaque l'organe qui laisse coulisser et s'incliner la plaque.

Suivant une variante de cette dernière forme de réalisation, l'organe de fixation sur le châssis comprend deux blocs alignés suivant la lame et comportant chacun une rainure longitudinale, dont l'une est ouverte à l'encontre de l'autre et dans chacune desquelles se pose librement une lame élastique fixée elle-même à un bord de la plaque, ces deux lames constituant avec les blocs l'organe qui laisse coulisser et s'incliner la plaque.

Dans les différentes formes de réalisation décrites, les deux organes de fixation sur le châssis peuvent, par leurs forures ou rainures, définir deux axes qui se recoupent dans le plan de la lame et sous celle-ci suivant un angle inférieur à 180°, à compter du côté de la lame. Dans ces conditions, la tension exercée sur la lame donne lieu, dans le plan de la lame, à une composante orientée vers le dos de la lame, qui se trouve ainsi stabilisée dans un plan perpendiculaire au châssis. Cette stabilisation du plan de la lame est intéressante pour le départ du trait de scie.

Par ailleurs, chaque plaque d'un équipage peut, au début du sciage, se trouver guidée par un organe fendu qui stabilise la lame tout en la laissant se dégager, ou bien peut être maintenue par un amortisseur.

Quelques formes de réalisation particulières de l'invention sont décrites ci-après avec référence aux Fig. 6 à 12.

Un équipage tendeur de lame conforme à l'invention est représenté par la Fig. 6, dans le cas d'une lame cambrée. L'équipage 15 comprend, à chaque extrémité d'une lame 16, une monture 17 qui est fixée sur le châssis (non représenté) participant au mouvement de va-et-vient par rapport à la pierre à scier. Chaque monture 17 comprend, comme organe de fixation sur le châssis, un bloc 18 dans lequel est ménagée une forure qui reçoit une tringle 19, laquelle peut coulisser et tourner dans la forure. La tringle 19 est fixée à une plaque rigide 20 surmontant le bloc 18, en l'occurrence dans une surépaisseur 21. La plaque 20 porte des doubles pattes 22, 23 auxquelles la lame 16 est fixée. La double patte inférieure 22 est fixée rigidement, par exemple par des boulons (non numérotés), mais pourrait être soudée. La double patte supérieure 23 est articulée par une broche 24, qui pourrait être remplacée par tout moyen équivalent. La lame 16 est montée dans les doubles pattes 22, 23 par des broches de lame 25, qui permettent un montage et un démontage aisés. Chaque plaque 20 porte, à une extrémité éloignée de la lame 16, un câble d'acier 26 formant amarre, qui aboutit, pour l'une des montures 17, au châssis et, pour l'autre monture, à un vérin hydraulique 27. Le vérin 27 est fixé au châssis de toute manière appropriée.

L'ensemble de l'équipage constitue donc le moyen d'annuler le couple de déviation du fait qu'il y a un axe de rotation sous la denture de la scie. Le coulissement des tringles 19 sert à permettre d'amener la scie en tension.

Deux paires de plaquettes 28 (dont seule la paire de gauche est représentée) entre lesquelles les plaques 20 s'insèrent sans serrage donnent à l'équipage 15 la bonne orientation au début du sciage. A mesure que celui-ci progresse, l'équipage 15 se dégage des paires de plaquettes 28 et est stabilisé par la position de la scie dans la coupe réalisée.

En variante, l'équipage 15 peut être stabilisé par des amortisseurs 29 (dont seul celui de droite est représenté).

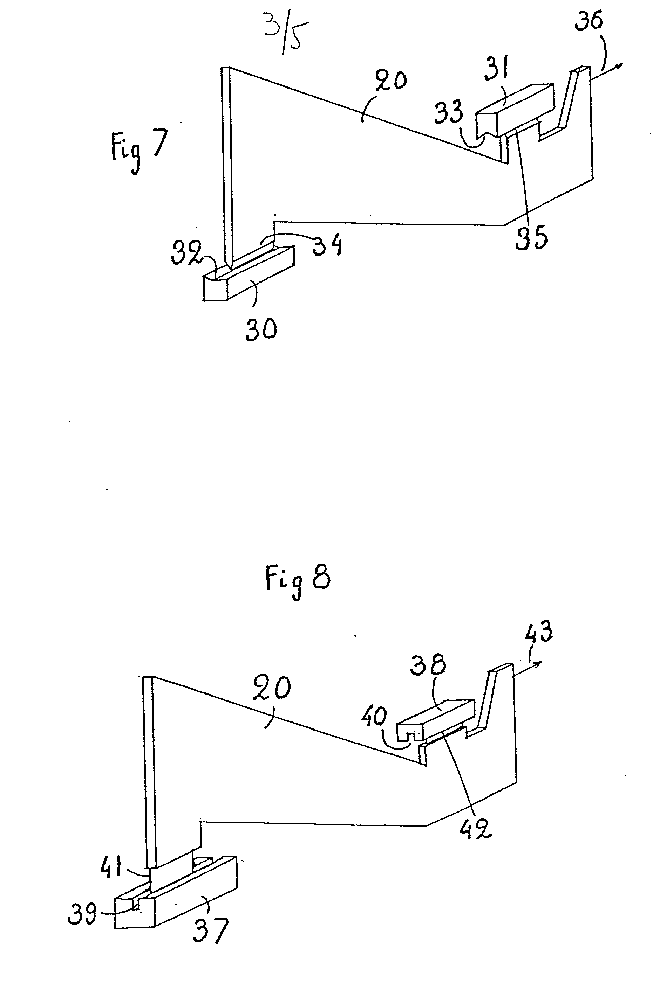

La Fig. 7 illustre la forme de réalisation où l'organe de fixation sur le châssis (non représenté) est constitué par deux blocs 30, 31 alignés suivant la lame et comportant chacun une rainure longitudinale en V 32, 33 dont l'une est ouverte à l'encontre de l'autre et dans chacune desquelles se pose un bord 34, 35 doublement chanfreiné de la plaque 20. La plaque 20 qui est représentée est celle du côté du vérin 27. Du fait que les rainures 32, 33 sont dans le prolongement l'une de l'autre, la force 36 qui tend la lame assure aussi l'équilibre de la plaque 20. La forme en V assure la rotation qui supprime le couple de déviation et le coulissement dans le plan de la lame.

La Fig. 8 illustre la variante de cette dernière forme de réalisation où l'organe de fixation sur le châssis (non représenté) est formé par deux blocs 37, 38 comportant chacun une rainure longitudinale 39, 40 dont l'une est ouverte à l'encontre de l'autre et dans chacune desquelles se pose librement une lame élastique 41, 42 elle-même fixée à un bord de la plaque 20. La représentation est la même qu'à la Fig. 7. Dans ce cas-ci, les lames élastiques assurent, par leur élasticité, la rotation qui supprime le couple de déviation et coulissent suivant le plan de la lame sous l'effet de la force 43.

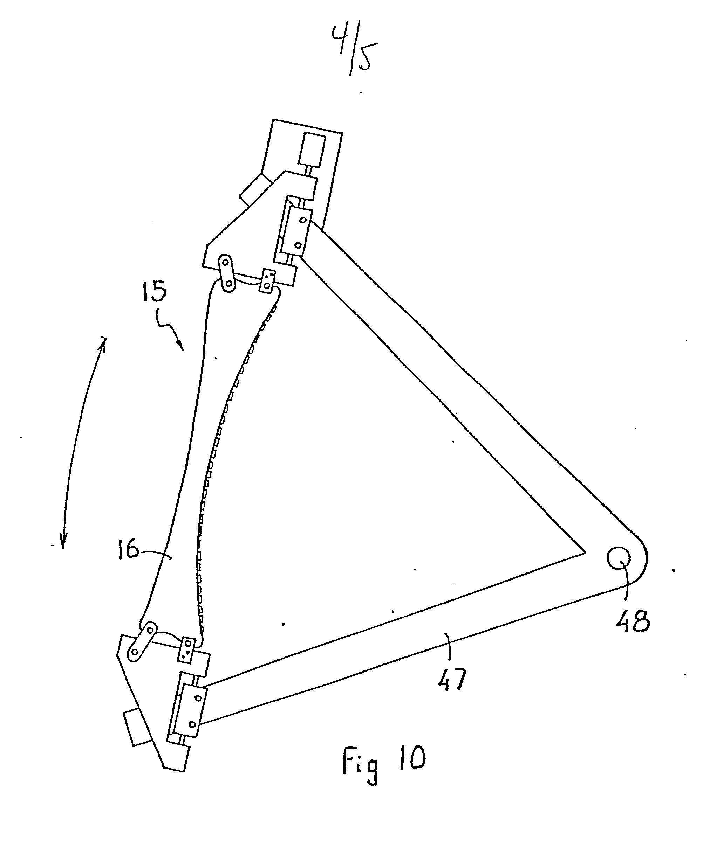

La Fig. 9 fait ressortir que, lorsque les organes 18 (ou 30, 31 ou bien 37, 38) de fixation sur le châssis définissent deux axes 44, 45 qui se recoupent dans le plan de la lame 16 et sous celle-ci suivant un angle inférieur à 180°, la tension exercée sur la lame crée une composante 46 située dans le plan de la lame, en direction du dos de la lame.

La Fig. 10 est une vue schématique d'un équipage complet 15 avec lame cambrée 16, tel qu'illustré à la Fig. 6, monté sur le châssis 47 d'une machine à scier la pierre d'un type commercialisé sous la marque déposée NORDIAX. Ce châssis 47 oscille comme indiqué par la flèche autour d'un axe 48.

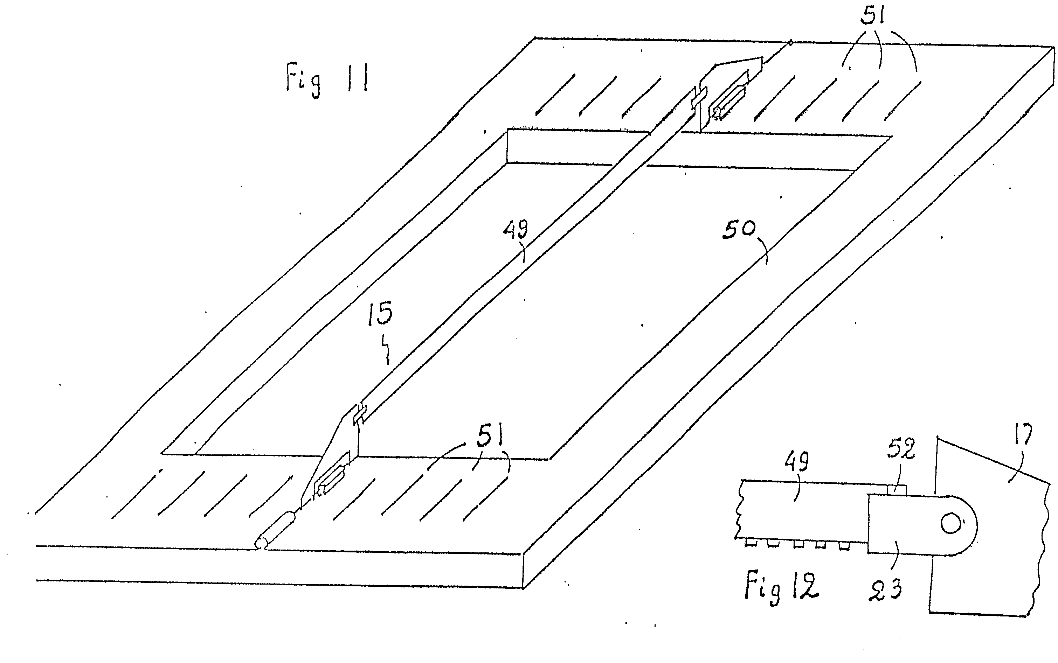

La Fig. 11 est une vue schématique d'un équipage complet 15 avec lame droite 49, monté sur le châssis en forme de cadre 50 d'une machine à scier la pierre à plusieurs lames droites. La position des autres lames est représentée par les alignements 51.

La Fig. 12 montre la lame droite 49 fixée par une clavette 52 dans la double patte supérieure 23 de la monture 17.

Les dispositifs conformes à l'invention permettent donc de bénéficier de la stabilisation spontanée de l'organe de coupe qui était particulière jusqu'à présent aux scies à câble hélicoïdal, dans lesquelles il n'existe pas de couple de déviation, et de conserver les avantages de rapidité des scies à lame diamantée, y compris celles d'un profil spécial pour pierres très dures.

Bien que divers modes et détails de réalisation aient été décrits pour illustrer l'invention, il va de soi que celle-ci est susceptible de nombreuses variantes et modifications sans sortir de son cadre.

REVENDICATIONS
------------------------

1.- Equipage tendeur pour lame de scie à pierre, caractérisé en ce qu'il comprend, à chaque extrémité de la lame (16), une monture (17) qui est fixée sur le châssis participant au mouvement relatif de va-et-vient par rapport à la pierre à scier, et qui comporte un organe de fixation sur le châssis (18), une plaque rigide (20) articulée sur cet organe de fixation (18) par un organe (19) qui la laisse coulisser dans le plan de la lame et s'incliner selon un axe parallèle à la lame et situé à un niveau non supérieur à celui de la denture de la lame, des organes de montage de la lame (22, 23) portés par la plaque à son bord proche de la lame, des organes d'amarrage longitudinal (26) qui sont portés par la plaque rigide à son bord éloigné de la lame et qui n'entravent pas l'inclinaison par rapport au châssis, l'un de ces organes d'amarrage aboutissant au châssis et l'autre, qui lui est opposé, aboutissant à un organe de traction (27) porté par le châssis.

2.- Equipage suivant la revendication 1, caractérisé en ce que l'organe de fixation sur le châssis (18) comprend une forure qui est orientée suivant la lame et qui reçoit une tringle (19) coulissant librement et constituant l'organe qui laisse coulisser et s'incliner la plaque.

3.- Equipage suivant la revendication 1, caractérisé en ce que l'organe de fixation sur le châssis comprend deux blocs (30, 31) alignés suivant la lame et comportant chacun une rainure longitudinale en V (32, 33) dont l'une est ouverte à l'encontre de l'autre et dans chacune desquelles se pose un bord (34, 35) doublement chanfreiné de la plaque (20), ces deux blocs constituant avec les bords de la plaque l'organe qui laisse coulisser et s'incliner la plaque.

4.- Equipage suivant la revendication 1, caractérisé en ce que l'organe de fixation sur le châssis comprend deux blocs (37, 38) alignés suivant la lame et comportant chacun une rainure longitudinale (39, 40), dont l'une est ouverte à l'encontre de l'autre et dans chacune desquelles se pose librement une lame élastique (41, 42) fixée elle-même à un bord de la plaque (20), ces deux lames constituant avec les blocs l'organe qui laisse coulisser et s'incliner la plaque.

5.- Equipage suivant l'une quelconque des revendications précédentes, caractérisé en ce que les deux organes de fixation sur le châssis définissent, par leurs forures ou rainures, deux axes (44, 45) qui se recoupent dans le plan de la lame et sous celle-ci suivant un angle inférieur à 180°, à compter du côté de la lame.

6.- Equipage suivant l'une quelconque des revendications précédentes, caractérisé en ce que chaque plaque se trouve, au début du sciage, guidée par un organe fendu (28) qui stabilise la lame tout en la laissant se dégager quand elle est engagée dans la coupe.

7.- Equipage suivant l'une quelconque des revendications 1 à 5, caractérisé en ce que chaque plaque se trouve maintenue par un amortisseur (29) qui stabilise la lame.

0100763

Fig 1

Fig 2

Fig 3

Fig 4

Fig 5

Fig 6

Fig 9

0100763

0100763

Fig 7

36

31

20

33

32

34

35

30

Fig 8

43

38

20

40

41

42

39

37

Fig 10

Fig 11

51

49

50

15

51

Fig 12

49

52

17

23

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 409 956 (BERRY) <br> * Page 2, lignes 27-51; figures * <br><br> --- | 1 | B 28 D 1/06 |
| A | FR-A-1 581 852 (KREUZER) <br><br> * En entier * <br><br> --- | | |
| A | US-A-1 746 662 (LEGGE) <br><br><br> ----- | | |

| | | |
|---|---|---|
| | | DOMAINES TECHNIQUES RECHERCHES (Int. Cl. ³) <br><br> B 28 D <br> B 23 D <br> B 27 B |

Le présent rapport de recherche a été établi pour toutes les revendications

| Lieu de la recherche <br> LA HAYE | Date d'achèvement de la recherche <br> 03-11-1983 | Examinateur <br> PEETERS S. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82